# EUROPÄISCHE PATENTSCHRIFT

(11) **EP 2 114 632 B1**
(45) Veröffentlichungstag und Bekanntmachung des Hinweises auf die Patenterteilung: **12.05.2010**
(21) Anmeldenummer: 08701213.4
(22) Anmeldetag: 03.01.2008
(51) Int. Cl.: B25J 17/02, B25J 19/06

(54) **VORRICHTUNG ZUM BEWEGEN UND POSITIONIEREN EINES GEGENSTANDES IM RAUM**
DEVICE FOR DISPLACING AND POSITIONING AN OBJECT IN A SPACE
DISPOSITIF PERMETTANT DE DÉPLACER ET DE POSITIONNER UN OBJET DANS L'ESPACE

(30) Priorität: 29.01.2007 DE 102007004166
(43) Veröffentlichungstag der Anmeldung: 11.11.2009
(73) Patentinhaber: Robert Bosch GmbH, 70442 Stuttgart (DE)
(72) Erfinder: BREU, Michael, CH-9450 Luechingen (CH); RENNER, Juergen, 78176 Blumberg (DE); RUTSCHMANN, Harry, 79771 Klettgau-Griessen (DE)
(86) Internationale Anmeldenummer: PCT/EP2008/050029
(87) Internationale Veröffentlichungsnummer: WO 2008/092710

(56) Entgegenhaltungen:
- WO-A-02/06017
- WO-A-03/106114
- US-A1- 2005 177 279

## Beschreibung

### Technisches Gebiet

Die Erfindung betrifft eine Vorrichtung zum Bewegen und Positionieren eines Gegenstandes im Raum, mit wenigstens drei mit je einer Motor/Getriebeeinheit verbundenen, um eine Getriebeachse schwenkbaren Betätigungsarmen, einem zur Anordnung wenigstens eines Greifmittels zum Greifen des Gegenstandes vorgesehenen Tragelement, wobei jeder Betätigungsarm an seinem freien Ende eine parallel zur Getriebeachse liegende erste Gelenkachse mit in Abstand zueinander angeordneten ersten Gelenkteilen je eines ersten Kugelgelenks aufweist, das Tragelement je eine jedem Betätigungsarm zugeordnete zweite Gelenkachse mit in Abstand zueinander angeordneten ersten Gelenkteilen je eines zweiten Kugelgelenks aufweist, die erste Gelenkachse mit der zweiten Gelenkachse über ein Paar Verbindungsstäbe mit endständigen zweiten Gelenkteilen verbunden ist und die endständigen zweiten Gelenkteile der Verbindungsstäbe mit den ersten Gelenkteilen auf der ersten Gelenkachse und den ersten Gelenkteilen auf der zweiten Gelenkachse die ersten und zweiten Kugelgelenke bilden, und wobei die Verbindungsstäbe zur Stabilisierung der Kugelgelenke miteinander verbunden sind. Bei der Vorrichtung zum Bewegen und Positionieren eines Gegenstandes im Raum handelt sich um eine in der Fachwelt als Roboter mit Parallelkinematik bezeichnete Vorrichtung.

### Stand der Technik

Eine auch unter dem Begriff "Delta-Roboter" bekannte Vorrichtung der eingangs genannten Art mit drei Parallelogrammgestängen ist aus WO-A-03/106114 bekannt. Die beiden einem Parallelogrammgestänge zugehörigen Verbindungsstäbe aus steifem Material weisen im Bereich der Kugelgelenke paarweise seitlich abragende Zapfen auf. Paarweise an gegenüberliegenden Seiten der Verbindungsstäbe angeordnete und um die Zapfen gelegte O-Ringe aus gummielastischem Material sind elastisch gespannt. Durch die zwischen den beiden Verbindungsstäben erzeugte Vorspannkraft werden die Gelenkpfannen auf den Kugeln gehalten. Weiter ergibt sich durch die Vorspannung das erforderliche Rückstellmoment, welches ein Verdrehen der Stäbe durch Reibung, dynamische Kräfte sowie Kräfte durch an den Stäben angebrachte Bauteile wie z.B. Vakuumschläuche, verhindert. Anstelle gummielastischer O-Ringe finden heute auch paarweise angeordnete Federn Verwendung. Ebenfalls bekannt sind aus US-A-6 419 211 nicht paarige Federelemente mit zwei Winkelelementen und zwischen diesen angeordneter Druckfeder.

Bei Überlast, d.h. wenn die Belastungen an den Gelenken grösser als die Vorspannkräfte werden, koppeln die Gelenke aus, was eine gewollte Sicherheitsfunktion darstellt und ein Zerstören des Roboters verhindert.

Nachteilig ist, dass dieses Auskoppeln nicht erkannt wird. Damit bewegen sich die Betätigungsarme des Delta-Roboters weiter, auch wenn bereits ein Parallelogrammgestänge ausgekoppelt ist, was zu unkontrollierten Bewegungen des Roboters führt. Die verbleibenden Verbindungsstabpaare oder auch das Tragelement können unkontrolliert weggeschleudert und allenfalls beschädigt werden. Da die Anlage selbst nicht feststellt, dass der Roboter nicht mehr funktionsfähig ist, läuft sie gegebenenfalls weiter, ohne dass geeignete Massnahmen getroffen werden, wie z.B. ein Stopp der ganzen Anlage oder die Übernahme einer Produktion auf die noch verbleibenden Roboter.

Wünschenswert ist daher, dass ein Auskoppeln eines Gelenkes sofort erkannt wird.

Bei einer aus US 2005/0177279 A1 bekannten Lösung erkennt ein auf dem Tragelement festgelegter Beschleunigungssensor ein durch Auskoppeln der Verbindungsstäbe verursachtes Abkippen des Tragelements. Diese Lösung ist vergleichsweise teuer und benötigt eine Elektronik auf dem Tragelement, die dessen Gewicht erhöht. Die notwendigen Kabel stellen bei der hohen Zyklenzahl des Delta-Roboters von 200 Zyklen/Minute durch Kabelbrüche ein zusätzliches Problem hinsichtlich der Lebensdauer dar. Zudem können die Kabel beim Auskoppeln beschädigt werden und die Demontage des Roboters behindern.

Es wurde auch schon versucht, aus den dynamischen Eigenschaften des Roboters oder der Antriebsmomente und der Leistungsaufnahme durch die Motoren auf die Vollständigkeit der Struktur des Roboters zu schliessen. Da sich diese Parameter aber auch durch die Belastung des Roboters am Greifer ändern, sind diese Lösungen nicht einfach zu implementieren.

Aus US-A-6 516 681 ist ein Roboter mit Parallelkinematik mit vier Parallelogrammgestängen bekannt.

### Darstellung der Erfindung

Der Erfindung liegt die Aufgabe zugrunde, eine Vorrichtung der eingangs genannten Art mit Mitteln auszustatten, die auf einfache Weise ermöglichen, das Auskoppeln eines Gelenkes eines Parallelogrammgestänges sofort zu erkennen.

Zur erfindungsgemässen Lösung der Aufgabe führt, dass die gegeneinander elektrisch isolierten Betätigungsarme, die Verbindungsstäbe, die Gelenkteile der Kugelgelenke und das Tragelement, auch Werkzeugträger oder Plattform genannt, elektrisch leitende oder Signalleitungen aufweisende Teile eines Überwachungsstromkreises bilden.

Die elektrische Isolation der drei Betätigungsarme kann durch Isolieren gegenüber den Motoren oder durch Isolieren der Motoren oder der Getriebe gegenüber dem Basiselement des Roboters erfolgen.

Das Signal wird direkt über Betätigungsarme, Gelenke und Verbindungsstäbe auf das Tragelement eingeleitet und entsprechend an den anderen Parallelogrammgestängen zurückgeleitet, wobei diese Elemente, wie vorstehend erwähnt, selber leitend ausgeführt sind oder entsprechende Signalleitungen aufweisen.

Es wird also über die Betätigungsarme und Parallelogrammstäbe des Roboters ein Überwachungsstrom/Signalkreis geschlossen. Dazu wird ein Überwachungssignal in einen Betätigungsarm eingeleitet und wahlweise über einen oder die beiden anderen Betätigungsarme zurückgeführt. Das Signal kann dabei direkt über die Gelenkkugeln und die Stäbe geführt und über das Tragelement auf die ableitenden Verbindungsstäbe weitergegeben werden.

Das Signal kann mittels geeigneter Filterung, z.B. als hochfrequentes Signal über einen Tiefpass/Hochpass-Filter von der Maschinenmasse getrennt werden, so dass die signalführenden Bauteile zur Verhinderung einer elektrostatischen Aufladung beispielsweise über einen Tiefpassfilter weiter auf Masse liegen können, um die Maschinensicherheit zu gewährleisten.

Bei einer ersten erfindungsgemässen Ausführung führt der Überwachungsstromkreis von einem Betätigungsarm über die Verbindungsstäbe, die Gelenkteile der Kugelgelenke und das Tragelement zu den beiden anderen Betätigungsarmen, wobei das Tragelement aus einem elektrisch leitenden Material besteht.

Bei einer zweiten erfindungsgemässen Vorrichtung führt der Überwachungsstromkreis von einem Betätigungsarm über die Verbindungsstäbe, die Gelenkteile der Kugelgelenke und das Tragelement zu den beiden anderen Betätigungsarmen, wobei das Tragelement aus einem elektrisch nicht leitenden Material besteht und zumindest zwei der einander benachbarten Gelenkteile der Kugelgelenke einander benachbarter Parallelogrammgestänge über einen elektrischen Leiter miteinander verbunden sind. Das Tragelement, auch Werkzeugträger genannt, kann also beispielsweise je nach vorgesehener Beschaltung elektrisch leitend ausgeführt sein, oder elektrisch isolierend mit entsprechender galvanischer Verbindung zwischen den korrespondierenden Gelenkkugeln.

Die Verbindungsstäbe bestehen bevorzugt aus einem Material mit integrierten elektrisch leitenden Komponenten bzw. Werkstoffen, z.B. aus einem Kohlefaser-Material. Die zugehörigen zweiten Gelenkteile enthalten bevorzugt elektrisch leitende Komponenten, und die ersten Gelenkteile bestehen ebenfalls aus einem elektrisch leitenden Grundwerkstoff, wie z.B. einer Aluminium-Legierung mit tribologisch günstiger Oberflächenbehandlung oder aus elektrisch leitenden Keramiken wie SiSiC oder Al₂O₃-TiN.

Die Kohlefaserstäbe, die Betätigungsarme sowie die an den Kohlefaserstäben angeordneten Endstücke mit einer Gelenkpfanne, welche aus einem grafithaltigen Kunststoff bestehen, sind heute schon ausreichend stromleitend, um ein Überwachungssignal weitergeben zu können.

Die heute üblichen Keramik-Gelenkkugeln können z.B. durch eine Nichtoxidkeramik ersetzt werden, welche ebenfalls über ausreichende Stromleitfähigkeit verfügt. Das auch als Plattform bezeichnete Tragelement kann selber elektrisch leitend ausgeführt sein, oder die Gelenkkugeln werden durch einen elektrischen Leiter miteinander verbunden. Damit sind die Vorraussetzungen für einen Signalkreis gegeben. Es müssen lediglich die Betätigungsarme gegenüber der Masse des Roboters isoliert sein, so dass das Signal nicht direkt zwischen den Betätigungsarmen zirkulieren kann, sondern über die Verbindungsstäbe und die Plattform geleitet wird.

Die Isolation kann auch durch einen Tiefpassfilter zwischen Betätigungsarmen und Masse erfolgen, wenn das Messsignal in einem entsprechenden Frequenzbereich liegt, so dass der Mechanismus nach wie vor auf Masse liegt und sich nicht z.B. elektrostatisch durch die bei der Bewegung entstehende Reibung aufladen kann.

Das Signal kann den Betätigungsarmen über Schleifringe oder Schleifköpfe ähnlich den Kugelgelenken zugeführt werden, oder es kann gleich an der Motormasse aufgebracht werden und direkt über die Welle der Antriebe in die Betätigungsarme eingeleitet werden. In diesem Fall muss die Masse vor den Motoren jeweils mit einem eigenen Tiefpassfilter getrennt werden.

Geht das Signal an den beiden ableitenden Betätigungsarmen verloren, so muss der Roboter an dem zuleitenden Betätigungsarm ausgekoppelt haben. Geht das Signal nur an einem der ableitenden Betätigungsarme verloren, so hat das entsprechende Parallelogramm ausgekoppelt. Auf diese Art und Weise kann anhand des Vorhandenseins der beiden ableitenden Signale geschlossen werden, ob und welches Beinpaar ausgekoppelt hat und ein sofortiger Stopp des Roboters eingeleitet werden. Damit wird verhindert, dass der Roboter sich weiter bewegt und weitere Beinpaare auskoppeln oder die Plattform vollständig verloren geht. Der Anlagensteuerung kann eine entsprechende Fehlermeldung zugeführt und die Anlage in einen geeigneten Betriebszustand überführt werden.

Bei einer Variante der zweiten erfindungsgemässen Vorrichtung führt der Überwachungsstromkreis von einem ersten Betätigungsarm über einen oder beide Verbindungsstäbe des Parallelogrammgestänges auf das Tragelement hinunter und über den einen Verbindungsstab eines benachbarten Parallelogrammgestänges zu einem zweiten Betätigungsarm hoch, über den anderen Verbindungsstab wieder zurück auf das Tragelement und weiter über den einen Verbindungsstab des benachbarten Parallelogrammgestänges zum dritten Betätigungsarm hoch. Bei dieser Ausführung ist nur eine Ableitung des Überwachungsstromes mit einer entsprechend einfacheren Schaltung erforderlich. Andererseits liefert das Ausbleiben des Signals keinen Hinweis darauf, welches der Beinpaare ausgekoppelt hat.

Die erfindungsgemässe Anordnung eines Überwachungsstromkreises bietet gegenüber den bekannten Systemen zur Überwachung des Betriebszustandes des Parallelogrammgestänges eines Delta-Roboters folgende Vorteile:
- Sicheres Erkennen eines ausgekoppelten Verbindungsstabes bzw. Parallelogrammgestänges.
- Erhöhte Betriebssicherheit, geringeres Risiko von Beschädigungen am Roboter, der Anlage oder Verletzungen des Betriebspersonals.
- Eindeutige Fehlererkennung durch Identifikation des Parallelogrammgestänges.
- Einfacher, zuverlässiger und sehr günstiger Aufbau: keine zusätzlichen, störanfälligen bewegten Kabel oder Sensoren erforderlich.
- Keine zusätzlichen Kabel, die die Demontage oder das Auskoppeln des Parallelogrammgestänges behindern und allenfalls selber beschädigt würden.
- Durch die Vorspannung der Gelenke ist der notwendige Kontakt in den Gelenkschalen zuverlässig hergestellt, und durch die dauernde Bewegung in Form einer Gleitreibung und die sich daraus ergebende definierte Abnutzung der Kontaktpaare, ohne Ablagerung von Verunreinigungen, Oxidaufbau o. ä., bleiben diese elektrisch gut leitend, so dass Fehlalarme praktisch ausgeschlossen sind.
- Die meisten Bauteile sind schon heute geeignet, den erforderlichen Signalkreis zu schliessen. Bei Verwendung von elektrisch leitenden Verbindungsstäben aus einem Kohlefaser-Material ist lediglich ein Ersatz der entsprechenden Gelenkteile durch eine leitende Keramik sowie ein Isolieren der Betätigungsarme von der gemeinsamen Masse, vorzugsweise über einen Tiefpassfilter, notwendig.

### Kurze Beschreibung der Zeichnung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Figur 1: eine Schrägsicht auf einen Delta-Roboter;
- Figur 2: eine Schrägsicht auf die Verbindung des Tragelements mit einem Paral- lelgestänge des Delta-Roboters von Fig. 1 in vergrösserter Darstellung;
- Figur 3: das Ersatzschaltbild für eine Beschaltung des Delta-Roboters von Fig. 1.

### Beschreibung von Ausführungsbeispielen

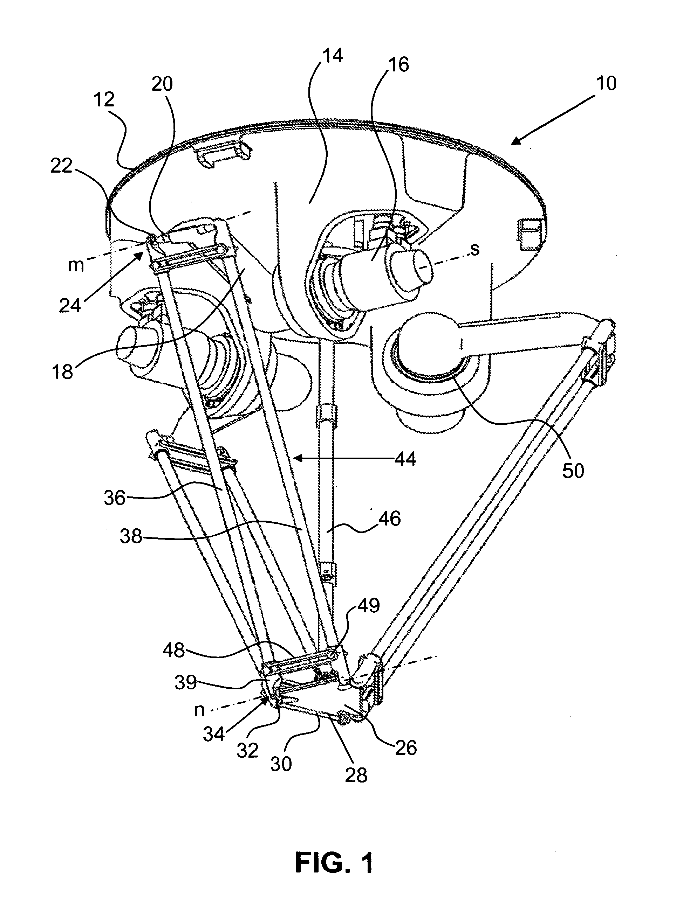

Ein in Figur 1 dargestellter Delta-Roboter 10 weist ein Basiselement 12 mit einer horizontalen Montageebene und drei vom Basiselement 12 abragende Halterungen 14 zur Aufnahme je einer Motor/Getriebeeinheit 16 auf. Auf je einer eine Getriebeachse s definierenden Getriebewelle jeder Motor/Getriebeeinheit 16 sitzt ein um die Getriebeachse s schwenkbarer Betätigungsarm 18. Die drei Getriebeachsen s liegen in einer Ebene parallel zur Montageebene des Basiselements 12 und ihre Schnittpunkte bilden die Ecken eines gleichseitigen Dreiecks. Am freien Ende jedes Betätigungsarms 18 ist ein eine parallel zur Getriebeachse s liegende erste Gelenkachse m definierender erster Gelenkstab 20 festgelegt. Jeder erste Gelenkstab 20 weist an seinen beiden Enden je ein erstes Gelenkteil 22 je eines ersten Kugelgelenks 24 auf. Die paarweise angeordneten ersten Gelenkteile 22 sind bezüglich je einer Vertikalebene spiegelsymmetrisch zueinander angeordnet, wobei sich die drei Vertikalebenen in einer gemeinsamen, eine Symmetrieachse für die Anordnung der drei Motor/Getriebeeinheiten 18 bildenden Vertikalachse schneiden und untereinander einen Winkel von je 120° einschliessen.

Ein im wesentlichen als Platte mit ein gleichseitiges Dreieck bildenden Seitenkanten 28 ausgestaltetes Tragelement 26, auch Werkzeugträger oder Plattform genannt, ist an jeder der drei Seitenkanten 28 mit einem zweiten, eine zweite Gelenkachse n definierenden zweiten Gelenkstab 30 ausgestattet. Jeder zweite Gelenkstab 30 weist an seinen beiden Enden je ein erstes Gelenkteil 32 je eines zweiten Kugelgelenks 34 auf. Die paarweise angeordneten ersten Gelenkteile 32 jedes zweiten Gelenkstabs 30 sind bezüglich einer Winkelhalbierenden des das Tragelement 26 charakterisierenden gleichseitigen Dreiecks spiegelsymmetrisch zueinander angeordnet.

Der Abstand zwischen den ersten Gelenkteilen 22 am freien Ende jedes Betätigungsarms 18 ist identisch mit dem Abstand zwischen den ersten Gelenkteilen 32 an den Seitenkanten 28 des Tragelements 26.

Jedem Betätigungsarm 18 ist eine Seitenkante 28 des Tragelements 26 zugeordnet. Je ein Paar identisch ausgestalteter Verbindungsstäbe 36, 38, auch Parallelogrammstäbe genannt, weisen an ihren Enden ein Endstück 39 mit je einem zweiten Gelenkteil 40, 42 auf. Jedes zweite Gelenkteil 40, 42 bildet mit einem ersten Gelenkteil 22, 32 am freien Ende des Betätigungsarms 18 bzw. an der Seitenkante 28 des Tragelements 26 ein entsprechendes erstes bzw. zweites Kugelgelenk 24, 34.

Die ersten Gelenkteile 22, 32 am freien Ende des Betätigungsarms 18 bzw. an der Seitenkante 28 des Tragelements 26 sind als Gelenkkugeln, die zweiten Gelenkteile 40, 42 an den Endstücken 39 der Verbindungsstäbe 36, 38 als Gelenkpfannen ausgestaltet.

Die beiden gleich langen Verbindungsstäbe 36, 38 bilden zusammen mit den beiden ebenfalls gleich langen Gelenkstäben 20, 30 ein Parallelogrammgestänge 44 mit je einem Kugelgelenk 24, 34 an jedem Eckpunkt des Parallelogramms. Die Verbindung der Betätigungsarme 18 mit dem Tragelement 26 über je ein ParallelogrammGestänge 44 verhindert die Rotation des Tragelements 26 um Achsen in allen drei Raumdimensionen. Das Tragelement 26 kann sich demnach nur parallel zu sich selbst in Reaktion auf eine Bewegung der Betätigungsarme 18 bewegen. Die gesteuerte Schwenkbewegung der Betätigungsarme 18 um deren Getriebeachsen s wird demzufolge in eine lineare Bewegung des Tragelements 26 umgewandelt.

Das Tragelement 26 ist mit dem Basiselement 12 über eine teleskopisch in ihrer Länge verstellbare zentrale Welle 46 zur Übertragung von Drehmomenten verbunden. Die zentrale Welle 46 ist über ein Kardangelenk am Tragelement 26 festgelegt. An ihrem dem Tragelement 26 entgegengesetzten Ende ist die zentrale Welle 46 mit einer Antriebswelle eines in der Zeichnung nicht dargestellten Servomotors verbunden. Über die zentrale Welle 46 kann eine Drehung des Tragelements 26 im dreidimensionalen Raum erzeugt werden.

In kurzem Abstand zu den ersten und zweiten Kugelgelenken 24, 34 weisen die beiden Verbindungsstäbe 36, 38 jedes Parallelogrammgestänges 44 paarweise von den Endstücken 39 seitlich abragende Zapfen 49 auf. Die Verbindungsstäbe 36, 38 sind über zwei im wesentlichen parallel zu den Gelenkachsen m, n liegende, als Vorspannelemente um die Zapfen 49 gelegte, elastisch gespannte O-Ringe 48 aus gummielastischem Material miteinander verbunden.

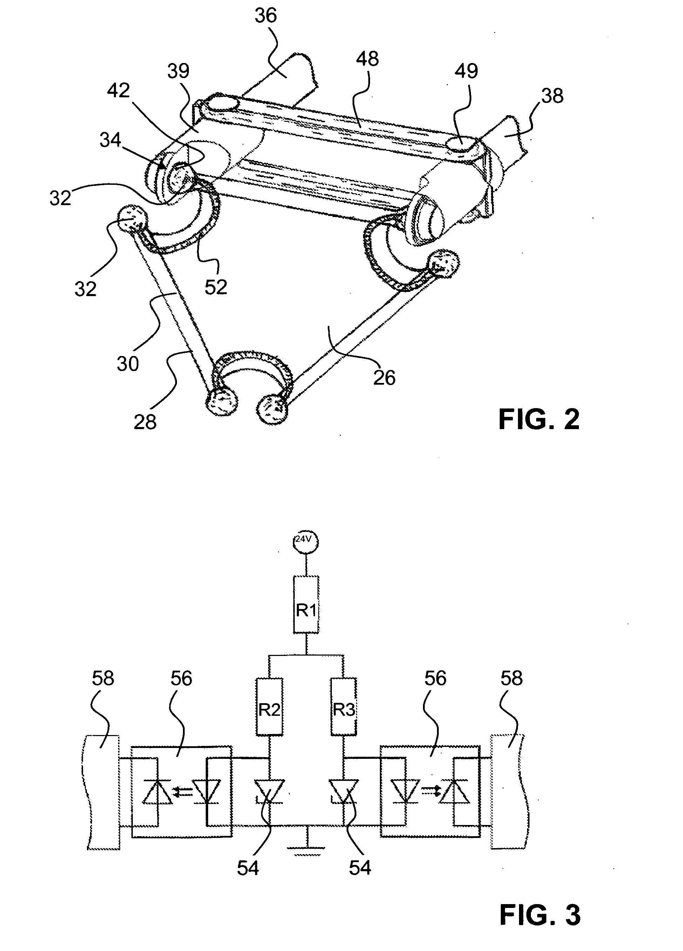

In Figur 2 sind benachbarte, aus elektrisch leitendem Material bestehende, als Gelenkkugeln ausgestaltete erste Gelenkteile 32 an dem aus einem elektrisch isolierenden Material gefertigten Tragelement 26 über elektrische Leiterbahnen 52 miteinander verbunden, Die Leitung eines elektrischen Überwachungsstroms erfolgt von einem elektrisch leitenden Verbindungsstab 38 aus Kohlefaser-Material eines Parallelogrammgestänges 44 über das aus Kunststoff mit Grafitanteil elektrisch leitende Endstück 39 auf ein erstes Gelenkteil 32 und von diesem über eine elektrische Leiterbahn 52 auf ein benachbartes erstes Gelenkteil 32 und über das aus Kunststoff mit Grafitanteil elektrisch leitende Endstück 39 auf den elektrisch leitenden Verbindungsstab 36 aus Kohlefaser-Material des benachbarten Parallelogrammgestänges 44.

Das in Fig. 3 dargestellte Ersatzschaltbild zeigt den Überwachungsstromkreis für eine Anordnung mit einem Tragelement aus einem elektrisch leitenden Material. Ein Überwachungsstrom von z.B. 24 Volt fliesst von einem ersten Betätigungsarm mit dem Ersatzwiderstand R1 über das Tragelement zu den beiden anderen Betätigungsarmen mit dem Ersatzwiderstand R2 bzw. R3 zurück. Die Einleitung des Überwachungsstroms in einen Betätigungsarm erfolgt z.B. über eine in Fig. 1 angedeutete Schleifring-Kontaktierung 50.

## Patentansprüche

1. Vorrichtung zum Bewegen und Positionieren eines Gegenstandes im Raum, mit wenigstens drei mit je einer Motor/Getriebeeinheit (16) verbundenen, um eine Getriebeachse (s) schwenkbaren Betätigungsarmen (18), einem zur Anordnung wenigstens eines Greifmittels zum Greifen des Gegenstandes vorgesehenen Tragelement (26), wobei jeder Betätigungsarm (18) an seinem freien Ende eine parallel zur Getriebeachse (s) liegende erste Gelenkachse (m) mit in Abstand zueinander angeordneten ersten Gelenkteilen (22) je eines ersten Kugelgelenks (24) aufweist, das Tragelement (26) je eine jedem Betätigungsarm zugeordnete zweite Gelenkachse (n) mit in Abstand zueinander angeordneten ersten Gelenkteilen (32) je eines zweiten Kugelgelenks (24) aufweist, die erste Gelenkachse (m) mit der zweiten Gelenkachse (n) über ein Paar Verbindungsstäbe (36, 38) mit endständigen zweiten Gelenkteilen (40, 42) verbunden ist und die endständigen zweiten Gelenkteile (40, 42) der Verbindungsstäbe (36, 38) mit den ersten Gelenkteilen (22) auf der ersten Gelenkachse (m) und den ersten Gelenkteilen (32) auf der zweiten Gelenkachse (n) die ersten und zweiten Kugelgelenke (24, 34) bilden, und wobei die Verbindungsstäbe (36, 38) zur Stabilisierung der Kugelgelenke (24, 34) miteinander verbunden sind,
**dadurch gekennzeichnet, dass**
die gegeneinander elektrisch isolierten Betätigungsarme (18), die Verbindungsstäbe (36, 38), die Gelenkteile (22, 32 40, 42) der Kugelgelenke (24, 34) und das Tragelement (26) elektrisch leitende oder Signalleitungen aufweisende Teile eines Überwachungsstromkreises bilden.

2. Vorrichtung nach Anspruch 1, **dadurch gekennzeichnet, dass** der Überwachungsstromkreis von einem Betätigungsarm (18) über die Verbindungsstäbe (36, 38), die Gelenkteile (22, 32 40, 42) der Kugelgelenke (24, 26) und das Tragelement (26) zu den beiden anderen Betätigungsarmen (18) führt, wobei das Tragelement (26) aus einem elektrisch leitenden Material besteht.

3. Vorrichtung nach Anspruch 1, **dadurch gekennzeichnet, dass** der Überwachungsstromkreis von einem Betätigungsarm (18) über die Verbindungsstäbe (36, 38), die Gelenkteile (22, 32 40, 42) der Kugelgelenke (24, 26) und das Tragelement (26) zu den beiden anderen Betätigungsarmen (18) führt, wobei das Tragelement (26) aus einem elektrisch nicht leitenden Material besteht und zumindest zwei der einander benachbarten Gelenkteile der Kugelgelenke (34) einander benachbarter Parallelogrammgestänge (44) über einen elektrischen Leiter (52) miteinander verbunden sind.

4. Vorrichtung nach einem der Ansprüche 1 bis 3, **dadurch gekennzeichnet, dass** die Verbindungsstäbe (36, 38) aus einem Material mit integrierten elektrisch leitenden Komponenten bzw. Werkstoffen, insbesondere aus einem Kohlefaser-Material, aus Aluminium oder aus Stahl bestehen.

5. Vorrichtung nach einem der Ansprüche 1 bis 4, **dadurch gekennzeichnet, dass** die zweiten Gelenkteile (40, 42) aus einem elektrisch leitenden Keramikmaterial, vorzugsweise aus SiSiC oder aus Al₂O₃-TiN, gefertigt sind.

6. Vorrichtung nach einem der Ansprüche 1 bis 5, **dadurch gekennzeichnet, dass** die ersten Gelenkteile (22, 32) aus einem elektrisch leitenden Grundwerkstoff, insbesondere aus einer Aluminium-Legierung mit tribologisch günstiger Oberflächenbehandlung, oder aus einem elektrisch leitenden Keramikmaterial, insbesondere SiSiC oder Al₂O₃-TiN bestehen.

## Claims

1. Apparatus for moving and positioning an article in space, with at least three actuating arms (18) connected in each case to a motor/gear unit (16) and pivotable about a gear axis (s), and with a carrying element (26) for arranging at least one gripping means for gripping the article, each actuating arm (18) having at its free end a first articulation axis (m), lying parallel to the gear axis (s), with first joint parts (22), arranged at a distance from one another, in each case of a first ball joint (24), the carrying element (26) having in each case a second articulation axis (n), assigned to each actuating arm, with first joint parts (32), arranged at a distance from one another, in each case of a second ball joint (24), the first joint axis (m) being connected to the second joint axis (n) via a pair of connecting rods (36, 38) having terminal second joint parts (40, 42), and the terminal second joint parts (40, 42) of the connecting rods (36, 38) forming, with the first joint parts (22) on the first articulation axis (m) and with the first joint parts (32) on the second articulation axis (n), the first and second ball joints (24, 34), and the connecting rods (36, 38) being connected to one another in order to stabilize the ball joints (24, 34), **characterized in that** the mutually electrically insulated actuating arms (18), the connecting rods (36, 38) the joint parts (22, 32, 40, 42) of the ball joints (24, 34) and the carrying element (26) form parts of a monitoring circuit which are electrically conductive or which have signal lines.

2. Apparatus according to Claim 1, **characterized in that** the monitoring circuit leads from one actuating arm (18) via the connecting rods (36, 38), the joint parts (22, 32, 40, 42) of the ball joints (24, 26) and the carrying element (26) to the other two actuating arms (18), the carrying element (28) consisting of an electrically conductive material.

3. Apparatus according to Claim 1, **characterized in that** the monitoring circuit leads from one actuating arm (18) via the connecting rods (36, 38), the joint parts (22, 32, 40, 42) of the ball joints (24, 26) and the carrying element (26) to the other two actuating arms (18), the carrying element (26) consisting of an electrically non-conductive material, and at least two of the mutually adjacent joint parts of the ball joints (34) of mutually adjacent parallelogram linkages (44) being connected to one another via an electrical conductor (52).

4. Apparatus according to one of Claims 1 to 3, **characterized in that** the connecting rods (36, 38) consist of a material having integrated electrically conductive components or substances, in particular of a carbon fibre material, of aluminium or of steel.

5. Apparatus according to one of Claims 1 to 4, **characterized in that** the second joint parts (40, 42) are manufactured from an electrically conductive ceramic material, preferably from SiSiC or from Al₂O₃-TiN.

6. Apparatus according to one of Claims 1 to 5, **characterized in that** the first joint parts (22, 32) consist of an electrically conductive basic material, in particular of an aluminium alloy having tribologically beneficial surface treatment, or of an electrically conductive ceramic material, in particular SiSiC or Al₂O₃-TiN.

## Revendications

1. Dispositif permettant de déplacer et de positionner un objet dans l'espace, comprenant au moins trois bras de commande (18) pouvant pivoter autour d'un axe de transmission (s), connectés à chaque fois à une unité moteur/transmission (16), un élément porteur (26) prévu pour l'agencement d'au moins un moyen de préhension pour saisir l'objet, chaque bras de commande (18) présentant à son extrémité libre un premier axe d'articulation (m) orienté parallèlement à l'axe de transmission (s), avec des premières parties d'articulation (22), disposées à distance les unes des autres, d'une première articulation à rotule respective (24), l'élément porteur (26) présentant à chaque fois un deuxième axe d'articulation (n) associé à chaque bras de commande, avec des premières parties d'articulation (32), disposées à distance les unes des autres, d'une deuxième articulation à rotule respective (24), le premier axe d'articulation (m) étant connecté au deuxième axe d'articulation (n) par le biais d'une paire de barres de connexion (36, 38) avec des deuxièmes parties d'articulation aux extrémités (40, 42), et les deuxième parties d'articulation aux extrémités (40, 42) des barres de connexion (36, 38) avec les premières parties d'articulation (22) sur le premier axe d'articulation (m) et avec les première parties d'articulation (32) sur le deuxième axe d'articulation (n) formant les première et deuxième articulations à rotule (24, 34), et les barres de connexion (36, 38) étant connectées l'une à l'autre pour stabiliser les articulations à rotule (24, 34),
**caractérisé en ce que**
les bras de commande (18) isolés électriquement les uns des autres, les barres de connexion (36, 38), les parties d'articulation (22, 32, 40, 42) des articulations à rotule (24, 34) et l'élément porteur (26) formant des pièces d'un circuit électrique de surveillance électriquement conductrices ou présentant des lignes de signaux.

2. Dispositif selon la revendication 1, **caractérisé en ce que** le circuit électrique de surveillance conduit depuis un bras de commande (18) par le biais des barres de connexion (36, 38), des parties d'articulation (22, 32, 40, 42) des articulations à rotule (24, 34) et de l'élément porteur (26), jusqu'aux deux autres bras de commande (18), l'élément porteur (26) se composant d'un matériau électriquement conducteur.

3. Dispositif selon la revendication 1, **caractérisé en ce que** le circuit électrique de surveillance conduit d'un bras de commande (18) par le biais des barres de connexion (36, 38), des parties d'articulation (22, 32, 40, 42) des articulations à rotule (24, 34) et de l'élément porteur (26), jusqu'aux deux autres bras de commande (18), l'élément porteur (26) se composant d'un matériau électriquement non conducteur et au moins deux des parties d'articulation adjacentes des articulations à rotule (34) de tringles de parallélogramme adjacentes (44) étant connectées l'une à l'autre par le biais d'un conducteur électrique (52).

4. Dispositif selon l'une quelconque des revendications 1 à 3, **caractérisé en ce que** les barres de connexion (36, 38) se composent d'un matériau avec des composants ou des matériaux électriquement conducteurs intégrés, notamment d'un matériau en fibre de carbone, d'aluminium ou d'acier.

5. Dispositif selon l'une quelconque des revendications 1 à 4, **caractérisé en ce que** les deuxièmes parties d'articulation (40, 42) sont fabriquées en un matériau en céramique électriquement conducteur, de préférence en SiSiC, ou en Al₂O₃-TiN.

6. Dispositif selon l'une quelconque des revendications 1 à 5, **caractérisé en ce que** les premières parties d'articulation (22, 32) sont constituées d'un matériau de base électriquement conducteur, notamment d'un alliage d'aluminium avec un traitement de surface favorable du point de vue tribologique, ou d'un matériau en céramique électriquement conducteur, de préférence en SiSiC, ou en Al₂O₃-TiN.
